# EUROPEAN PATENT SPECIFICATION

(11) **EP 2 120 591 B1**
(45) Date of publication and mention of the grant of the patent: **26.09.2012**
(21) Application number: 08700919.7
(22) Date of filing: 01.02.2008
(51) Int. Cl.: A23C 9/13, A23C 9/133, A23C 21/06, A23C 21/02, A23C 21/08

(54) **NOVEL DRINKING YOGHURT AND PROCESS FOR MANUFACTURE THEREOF**
NEUER TRINK-JOGHURT UND VERFAHREN ZU SEINER HERSTELLUNG
NOUVEAU YAOURT À BOIRE ET PROCÉDÉ DE FABRICATION DE CELUI-CI

(30) Priority: 02.02.2007 US 899034 P
(43) Date of publication of application: 25.11.2009
(73) Proprietor: Arla Foods Amba, 8260 Viby J (DK)
(72) Inventor: ANDERSEN, Claus, DK-7500 Holsterbro (DK); CHRISTENSEN, Gunner, B1640FTX Buenos Aires (AR); BURLING, Hans, S-22 220 Lund (SE)
(74) Representative: Münzer, Marc Eric
(86) International application number: PCT/DK2008/000048
(87) International publication number: WO 2008/092458

(56) References cited:
- EP-A1- 0 184 267
- EP-A1- 0 519 127
- EP-A1- 0 639 335
- EP-A1- 0 642 740
- WO-A1-98/05221
- GB-A- 1 492 981
- GB-A- 1 492 981
- JP-A- 55 050 885
- JP-A- 58 020 180
- JP-A- 60 262 584
- US-A- 4 110 476
- US-A- 4 110 476
- US-A- 4 956 185
- US-A1- 2005 129 825
- KAILASAPATHY K ET AL: "EFFECT OF PARTIALLY REPLACING SKIM MILK POWDER WITH WHEY PROTEIN CONCENTRATE ON THE SENSORY QUALITIES OF LACTOSE HYDROLYSED ACIDOPHILUS YOGURT", MILCHWISSENSCHAFT, VV GMBH VOLKSWIRTSCHAFTLICHER VERLAG. MUNCHEN, DE, vol. 53, no. 7, 1 January 1998 (1998-01-01), pages 385-389, XP000785246, ISSN: 0026-3788

## Description

### Field of the invention

The present invention relates to fermented dairy products and to a process for the manufacture of dairy products. More specifically, the invention relates to a novel drinking yoghurt and processes for the manufacture thereof.

### Background of the invention

Normally, when manufacturing drinking yoghurt or drinkable fermented dairy based products the product base is milk adjusted to an appropriate fat content. Typically, the milk has a bovine origin. After heat treatment, e.g. at 95 deg. C for 5 min. the milk is inoculated with a starter culture, which is often based on bacteria from strains of *S*. *thermophilus* and *L*. *bulgaricus.* After end of fermentation the coagulum is broken by stirring, which is followed typically by adding fruit or juice concentrate for flavouring. This mixture is finally homogenized and packed.

Important quality parameters for drinking or drinkable yoghurt are e.g. mouthfeel, creaminess and freedom of syneresis, i.e. low expulsion of whey during storage and no phase separation. However, many drinking yoghurts suffer from syneresis which gives the consumer an unpleasant experience when drinking this healthy beverage. Accordingly, there is a strong desire in the market for having improved organoleptic properties of drinkable yoghurt products and with improved nutritional value.

There is also an increasing industrial interest for finding ways of using cheaper raw materials for production of drinking yoghurt than used hitherto. It has been suggested to replace part of the milk with liquid whey. The traditional process of using acid whey implies problems related to precipitation or sedimentation during the pasteurization, which leads to decreased organoleptic properties. Furthermore it appears difficult to prepare powdered ingredients based upon acid whey due to a low quality of the powder. Normally, acid whey is nowadays used as animal feed or is not used at all. Furthermore, there is a need at many dairy plants to find a more profitable use of acid whey than the use as pig feed.

Ways of simplifying the processing of drinking yoghurt are also of interest; especially to avoid the coagulum formation after fermentation as this process step involved a high degree of operational work and contamination problems. As described above, in the normal process the coagulum is anyhow deliberately destroyed during a homogenization procedure. By omitting coagulum formation the need of homogenization to break down the casein coagulum can thus be left out in the process scheme. Thus, there is a need for avoiding coagulum formation while maintaining the right flavour and organoleptic characteristics of drinking yog hurt.

### Prior art:

US 4,110,476 A pertains to a liquid yogurt base and frozen yogurt mix and specifically to an improved base yielding a liquid yogurt which will remain drinkable and not thicken with age, which will hold fruit particles in suspension, and will not develop objectionable off-flavors.

US 4 956 185 A discloses dry, powdered yogurt products, and processes for preparing the same. The dry products contain the milk solids and whey and may be reconstituted to form either a liquid or a semi-solid food by the addition of a liquid such as milk.

GB 1 492 981 A describes a yoghurt drink containing skimmed milk powder, whey powder, sugar and flavouring agent. In example 1, a yoghurt drink having a whey protein:casein ratio of 1.63:1 is described. According to the present invention, a whey protein:casein ratio of 1.63:1 corresponds to a casein:whey protein ratio of 38:62.

### Summary of the invention

Thus, an object of the present invention relates to the provision of a drinking yoghurt having the same flavour and organoleptic characteristics as a traditional drinking yoghurt but which has, compared to a traditional drinking yoghurt, a different protein structure and a different composition with regard to the content of casein and whey proteins.

Furthermore, it is an object of the present invention to provide a process for the manufacturing of such a drinking yoghurt which takes into account all the above-mentioned industrial needs and solves the mentioned problems of the prior art.

Thus, one aspect of the invention relates to a drinking yoghurt comprising casein and whey protein in a casein:whey protein ratio of from 4:96 to 12:88 (w/w).

Another aspect of the present invention relates to a drinking yoghurt comprising a total protein concentration in the range from about 1% (w/w) to about 3% (w/w).

Yet another aspect of the present invention relates to a fruit flavoured smoothie drink comprising a drinking yoghurt according to the present invention.

Still another aspect of the present invention relates to a process for making drinking yoghurt without coagulum formation after fermentation, comprising combining casein and whey proteins to prepare a drinking yoghurt comprising a casein:whey protein ratio of from 4:96 to 12:88 (w/w). According to preferred embodiments, the process comprises adding a quantity of whey product base to a quantity of milk product base to prepare a drinking yoghurt comprising casein and whey proteins in a casein:whey protein ratio of from 4:96 to 12:88 (w/w).

### Detailed description of the invention

### Definitions

Prior to discussing the present invention in further details, the following terms and conventions will first be defined:
In the present context, the terms "**Drinking or drinkable yoghurt/yogurt or yogurt drink**", less commonly "yoghourt" or "yogourt", relate to a dairy product produced by bacterial fermentation of milk and having a low viscosity. The viscosity of a conventional drinking yoghurt at a temperature of 10°C is from 50-400 centipoise (cP), while a stirred yoghurt has a viscosity of above 10.000 cP.

"**Product base**" is in the present context to be understood as the basic compound or a composition of compounds from which the drinking yoghurt manufacturing process is based on and/or initiated from. As described in detailed below, the drinking yoghurt manufacturing process according to the present invention is based on a combination of a whey product base and a fat-containing product base. The expression **"whey product base"** is used for a prepared whey mixture comprising mainly liquid whey from cheese production, and the expression **"fat-containing product base"** relates to a prepared fat-containing mixture comprising mainly water and fat-containing compounds.

**"Whey"** or **"liquid whey"** is a collective term referring to the serum or watery part of milk that remains after the manufacture of cheese. The milk may be from one or more domesticated ruminants, such as cows, sheep, goats, yaks, water buffalo, horses, or camels.

In the present context, the term **"acid whey"** (also known as sour whey) relates to whey, which is obtained during making of acid type of cheese such as cottage cheese and quark, or from the production of casein/caseinates. The pH value of acid whey can range between 3.8 and 4.6.

**"Sweet whey"** relates to whey which is obtained during making of rennet type hard cheese like cheddar or Swiss cheese. The pH value of sweet whey can range between 5.2 and 6.7.

The term **"whey powder"** relates to the product obtained by drying the liquid whey.

In the present context, the expressions **"whey Protein Concentrate (WPC)"** relates to the dry portion of liquid whey obtained by the removal of sufficient non-protein constituents from whey so that the dry product contains not less than 25% protein.

**"Whey protein"** is the name for a collection of globular proteins that can be isolated from liquid whey. It is typically a mixture of beta-lactoglobulin (∼65%), alpha-lactalbumin (∼25%), and serum albumin (∼8%), which are soluble in their native forms, independent of pH.

The term **"coagulum"** is used in its traditional meaning and relates to the protein network which is formed during fermentation of a fermented dairy product.

**"Permeate"** or **"permeate fractions"** of whey results from filtration of whey, such as e.g. ultrafiltration.

**"Casein"** or **"Calcium caseinate"** or **"caseinate"** are used herein in their traditional meaning and relate to the most predominant phosphoprotein found in milk and cheese.

### Preferred embodiments

The present inventors surprisingly found that reducing the casein content in the product base below the critical concentration for gel formation and at the same time partially replacing the casein with whey proteins it was possible to make drinking yoghurt with excellent and improved organoleptic and physical properties but with no formation of a coagulum. The breaking of the coagulum can thus be eliminated, which fulfils the desire of dairy plants for simplifying the process of making drinking yoghurt. The elimination of one traditional step in the process and the use of whey as the dominant part of the product base will not only provide improved process economy, but also provide a much better utilization of a low value raw material.

Whey proteins are recognized as being of very high nutritional quality and value. They are easily digested and the amino acid profile meets or exceeds all the recommended nutritional requirements. Thus, due to the high content of whey proteins and low content of casein, the drinking yoghurt according to the invention is an excellent choice for individuals who want to enjoy a drinking yoghurt with its normal taste and texture while simultaneously enjoying the nutritional benefits of whey proteins.

As stated above, a first aspect of the present invention, relates to a drinking yoghurt comprising casein and whey protein in a casein:whey protein ratio of from 4:96 to 12:88 (w/w).

As shown in the below examples, a casein:whey protein ratio of from 4:96 to 12:88 (w/w), preferable a ratio of 8% casein/caseinate and 92% whey protein, were found optimal for keeping good sensoric and organoleptical properties characterizing normal drinking yoghurt.

In a preferred embodiment, the drinking yoghurt is one wherein the casein concentration is in the range from about 0.1% (w/w) to about 1% (w/w), such as in the range from about 0.1% (w/w) to about 0.8% (w/w), including in the range from about 0.1% (w/w) to about 0.5% (w/w), e.g. in the range from about 0.1% (w/w) to about 0.4% (w/w), in the range from about 0.1% (w/w) to about 0.3% (w/w), or in the range from about 0.1% (w/w) to about 0.2% (w/w), such as in the range from about 0.2% (w/w) to about 1% (w/w), including in the range from about 0.2% (w/w) to about 0.8% (w/w), the range from about 0.2% (w/w) to about 0.5% (w/w), in the range from about 0.2% (w/w) to about 0.4% (w/w) e.g. in the range from about 0.3% (w/w) to about 1% (w/w), in the range from about 0.3% (w/w) to about 0.8% (w/w), in the range from about 0.3% (w/w) to about 0.5% (w/w), such as in the range from about 0.4% (w/w) to about 1% (w/w), or such as in the range from about 0.4% (w/w) to about 0.8% (w/w).

In preferred embodiments, the total protein content in the drinking yoghurt is in the range from about 0.9% (w/w) to about 2.7 % (w/w) or in the range from about 1.8% (w/w) to about 2.3 % (w/w), such as in the range from about 1.7 % (w/w) to about 2.6 %(w/w), including in the range from about 1.7 % (w/w) - 2.4 % (w/w), e.g. in the range from about 1.8 % (w/w) to about 2.3 % (w/w), in the range from about 1.9 % (w/w) to about 2.3 % (w/w), in the range from about 2 % (w/w) to about 2.2 % (w/w). However, in a preferred embodiment the total protein content is 2.1 % (w/w).

In an even further embodiment, the drinking yoghurt is one wherein the total protein concentration is at the most 2.7%, such as at the most 2.4%, such as at the most 2.3%, including at the most 2.1%, e.g. at the most 1.8%, such as at the most 1.6%, including at the most 1.4%, including at the most 1.2%, but not below 0.9%.

The present inventors further found that in order to obtain the desired flavour and organoleptical properties of the drinking yoghurt, the total protein content of the product base has to be adjusted to about 1% (w/w) to about 3% (w/w), where a total protein content of about 2.3% before adding flavouring material is preferred.

Thus, a further aspect provides a drinking yoghurt comprising a total protein concentration in the range from about 0.9% (w/w) to about 2.7% (w/w). However, in preferred embodiments, the total protein content in the drinking yoghurt is in the range from about 1.8% (w/w) to about 2.3 % (w/w), such as in the range from about 1.6 % (w/w) to about 2.6 %(w/w), including in the range from about 1.7 % (w/w) - 2.5 % (w/w), e.g. in the range from about 1.8 % (w/w) to about 2.4 % (w/w), in the range from about 1.9 % (w/w) to about 2.3 % (w/w), in the range from about 2 % (w/w) to about 2.2 % (w/w). However, in a preferred embodiment the total protein content is 2.1 % (w/w).

In an even further embodiment, the drinking yoghurt is one wherein the total protein concentration is at the most 2.7%, such as at the most 2.3%, including at the most 2.2%, e.g. at the most 1.8%, such as at the most 1.6%, including at the most 1.3%, including at the most 1.2%, but not below 0.9%.

In a further embodiment, the drinking yoghurt is one wherein the sum of the concentration of casein and whey proteins is in the range from about 0.9% (w/w) to about 2.7% (w/w), such as in the range from about 1.8% (w/w) to about 2.4% (w/w). Most preferred is a sum of concentration of casein and whey proteins of 2.3% (w/w).

Another aspect of the present invention provides a fruit flavoured smoothie drink comprising a drinking yoghurt according to the invention. The term "smoothie drink" relates in the present context to a yoghurt based beverage which is blended, chilled and made from fruit, such as fresh or frozen fruit, or a fruit blend, a fruit juice, an extract from fruit, or a concentrate of fruit or of fruit juice. According to specific embodiments, the amount of fruit added corresponds to 2-20% (w/w) of the total weight of the product, such as 5-15% (w/w), 7,5-12.5% (w/w), or such as 8-12% (w/w). In the presently most preferred embodiments the fruit is added in an amount corresponding to 10% (w/w) of the total weight of the product.

In a further aspect of the present invention, there is provided a process for making drinking yoghurt without coagulum formation after fermentation, said drinking yoghurt having organoleptic parameters characterizing a normal drinking yoghurt, comprising adding a quantity of whey product base to a quantity of milk product base to prepare a drinking yoghurt comprising casein and whey proteins in a casein:whey protein ratio of from 4:96 to 12:88 (w/w). In a preferred embodiment, the casein:whey protein ratio is 8:92 (w/w).

By the process of the present invention there is no coagulum formation, which means that the process, compared to the traditional process of making drinking yoghurt, has been simplified by circumventing the operational work and contamination problems involved in breaking the coagulum.

The present inventors were the first to find the critical casein concentration for the coagulum formation in yoghurt. Based on this finding, it was possible to provide a process for making drinking yoghurt where the formation of a coagulum after fermentation is prevented. In accordance with the present invention, the regulation of the casein concentration is successfully made by replacing a part of the casein content of the product base by whey proteins and/or permeates. Thus, by keeping the casein:whey protein ratio between 4:96 and 12:88 (w/w) it was found that the formation of a coagulum is prevented while still maintaining the flavour and organoleptic properties of a traditional drinking yoghurt.

Furthermore, due to the use of such high concentration of whey, which is considered a low value product, compared to the concentration of casein from milk, which is considered a high value product, the present invention provides profitable advantages over the traditional manufacturing procedure for drinking yoghurt.

In accordance with preferred embodiments of the present invention, the process for making a drinking yoghurt makes use of a product base, which consists of the above-defined whey product base and fat-containing product base.

In a preferred embodiment, the whey product base is based on a whey mixture comprising acid whey or sweet whey. In a preferred embodiment, the whey product base is based on a whey mixture comprising acid whey. Acid whey may be prepared as a by-product of the manufacture of fresh cheese, such as cottage cheese, cream cheese, quark, and fromage frais, according to methods known in the prior art. Thus, the acid whey may be obtained when separating the cloudy liquid from the solid curd resulting from the coagulation of the milk by means of decreasing the pH to the iso-electric pH.

In a useful embodiment, the whey product base is based on a whey mixture comprising sweet whey. This sweet whey or permeate may be the result from ultrafiltration of milk or whey.

In a further embodiment, the whey mixture further comprises whey protein concentrate (WPC) as defined above. Such whey protein concentrate may comprise between 20 and 40% whey protein (w/w), such as between 25 - 35 % whey protein (w/w), or about 30% whey protein (w/w). The addition of WPC leads to an improved viscosity.

In a useful embodiment, an edible sugar, such as glucose, sucrose, lactose or fructose, is added to the whey mixture in amounts of 2-10% (w/w). In a preferred embodiment, the amount is 4-9% (w/w), and in a most preferred embodiment the amount of added sugar is 5-8% (w/w). The addition hereof leads to an improved organoleptic quality by providing sweetness to the yoghurt.

The whey mixture may preferable be prepared at a temperature between 0 and 50°C, more preferable at a temperature between 2-20°C, most preferable at a temperature between 5-10°C.

The whey product base used in the process of the invention results from swelling of the prepared whey mixture, which means that the whey mixture is subjected to a given temperature for a specified period of time in order to allow an addition of the protein hydrate, which is free of clotting.

Thus, in a preferred embodiment, the whey mixture is subjected to a swelling treatment at a temperature between 0 and 40°C for 0 to 24 hours resulting in the whey product base. In further embodiments, the swelling treatment is accomplished by leaving the whey mixture at 0-40°C, such as at a temperature between 0-25°C, including at a temperature between 0-10°C for 0-24 hours, e.g. at a temperature between 0-5 hours, such as at a temperature between 15-30 minutes.

After the swelling treatment, the resulting whey product base is subjected to a preheating treatment, followed by a homogenization treatment and a pasteurization treatment and finally to a cooling step. These treatments are preferably performed short time before mixing the whey product base with the fat-containing product base.

Thus, in useful embodiments, the whey product base is preheated at a temperature between 40 and 90°C, preferably at a temperature between 45-70°C, 55-65°C or 70-90°C and most preferable at 60°C. The pre-heating step may be for a few seconds, such as 10 sec.

The homogenisation step of the whey product base may be performed, preferably by a two step homogenisation, at preferred pressures such as 300 and 25 bar, 250 and 40 bar, most preferably at 200 and 50 bar.

The pasteurization treatment of the whey product base may be at a temperature between 70-98°C, 75-95°C, 70-90°C and most preferable at 85°C for 5-6 minutes. Subsequently, the whey product base is cooled down to a temperature between 5 and 10°C.

In one embodiment, the content of the whey protein concentrate (WPC) in the whey product base is between 6.0% and 7.2% (w/w), preferable in an amount of between 6.1% and 7.1% (w/w), such as between 6.2% and 7.0% (w/w), including between 6.3% and 6.9% (w/w), e.g. between 6.4% and 6.8 % (w/w), such as between 6.5% and 6.7% (w/w) and in a most preferred embodiment the amount of added WPC is 6.6 % (w/w).

In accordance with the present process, the other part of the product base is a fat-containing product base. This product base mainly consists of water and a fat-containing compound in an amount sufficient to enrich the final product with a sense of mouth feel.

Thus, in a useful embodiment, the fat-containing product base is based on a fat-containing mixture obtained by mixing water and a fat-containing component selected from the group consisting of cream, butter, butter oil, vegetarian fat-containing compounds and full fat milk. "Cream" is here to be understood as the fatty component of milk.

Furthermore, caseinate and/or whey protein concentrate (WPC) may be added to the fat-containing mixture. The addition of WPC implies an higher viscosity, which improves the organoleptic property and caseinate provides the yoghurt with a desired mouthfeel. In preferred embodiments, the caseinate and/or whey WPC comprises between 20 and 40% protein, such as between 25 - 35 % protein, or 30% protein.

In a useful embodiment, an edible sugar, such as glucose, sucrose, lactose or fructose, is added to the fat-containing mixture in amounts of 2-10% (w/w). In a preferred embodiment, the amount is 4-9% (w/w), and in a most preferred embodiment the amount of added sugar is 5-8% (w/w).

The fat-containing mixture may preferable be prepared at a temperature between 0 and 50°C, more preferable at a temperature between 2-20°C, most preferable at a temperature between 5-10°C.

The fat-containing product base used in the process of the invention results from swelling of the prepared fat-containing mixture, which means that the fat-containing mixture is subjected to a given temperature for a specified period of time in order to allow an addition of the protein hydrate, which is free of clotting.

Thus, in a preferred embodiment, the fat-containing mixture is subjected to a swelling treatment at a temperature between 0 and 40°C for 0 to 24 hours resulting in the fat-containing product base. In further embodiments, the swelling treatment is accomplished by leaving the fat-containing mixture at 0-40°C, more preferably at 0-25°C and most preferably at 0-10°C for 0-24 hours, more preferably for 0-5 hours, most preferably for 15-30 minutes.

After the swelling treatment, the resulting fat-containing product base is subjected to a preheating treatment, followed by a homogenization treatment and a pasteurization treatment and finally to a cooling step. These treatments are preferably performed short time before mixing the fat-containing product base with the whey product base.

Thus, in useful embodiments, the fat-containing product base is preheated at a temperature between 40 and 90°C, preferably at a temperature between 45-70°C, 55-65°C or 70-90°C and most preferable at 60°C. The pre-heating step may be for a few seconds, such as 10 sec.

The homogenisation step of the fat-containing product base may be performed, preferably by a two step homogenisation, at preferred pressures such as 300 and 25 bar, 250 and 40 bar, most preferably at 200 and 50 bar.

The pasteurization treatment of the fat-containing product base may be performed at a temperatures between 80-99°C, 75-95°C, 80-99°C, 85-99°C, 90-99°C and most preferable at 95°C for 5-6 minutes. Subsequently, the fat-containing product base is cooled down to a temperature around 42°C.

In one embodiment, the content of the whey protein concentrate (WPC) in the fat-containing product base is between 6.0% and 7.2% (w/w), preferable in an amount of between 6.1% and 7.1% (w/w), such as between 6.2% and 7.0% (w/w), including between 6.3% and 6.9% (w/w), e.g. between 6.4% and 6.8 % (w/w), such as between 6.5% and 6.7% (w/w) and in a most preferred embodiment the amount of added WPC is 6.6 % (w/w).

The content of the fat-containing component in the fat-containing product base is preferable at the most 15% (w/w). In preferred embodiments, the amount of fat-containing component is at the most 14.5, 14.0, 13.5, 13.0, 12.5, 12.0, 11.5, 11.0, 10.5, 10.0, 9.5 and 9.0 % (w/w).

In a useful embodiment, the fat-containing product base is subjected to an acidification step to an intermediate pH. After the cooling step, the acidification of the fat-containing product base is taking place by addition of starter cultures such as one or more bacterial cultures from the group of thermophilic cultures, mesophilic cultures and thermophilic cultures. Strains of *S*. *thermophilus* and *L*. *bulgaricus* were preferred. It will be understood that the addition of a starter culture results in a fermentation of the fat-containing product base. The acidification may also be achieved by sole or combined addition of organic acids such as one or more acids from the group consisting of organic acid e.g. acetic acid, lactic acid, malic acid, citric acid, phosphorous acid or Glucono Delta Lactone (GDL).

In preferred embodiments, the fat-containing product base is subjected to an acidification step to an intermediate pH between 5 and 6.8, such as between of 5 and 6.7, including between 5 and 6.6, e.g. between 5.2 and 6.4. In a preferred embodiment, the fat-containing product base is subjected to an acidification step to an intermediate pH of 6.4.

After the preparation of the whey product base and the fat-containing product base, the two product bases are mixed until a homogenous mixture is obtained. In the case of acid whey it is important to have separate base treatments for the whey product base and the fat-containing product base in order to avoid fouling in the plate heat exchanger when using acid whey.

However, a direct mix of the ingredients for the whey product base product and fat-containing base product and can also be performed if acid whey is not present in the recipe as shown in examples 2 and 3. In relation to these embodiments it will be understood that any feature relating to the ingredients present in the whey product base or in the milk product base will also apply to the same ingredients if directly mixed. A variety of raw materials can be used to create the balance between casein/caseinate and whey proteins while maintaining the upper limit of total protein content of about 2.3 % in the drinking yoghurt.

After the mixing of the whey and fat-containing product bases, a further component having no or a low concentration of casein may be added to the drinking yoghurt. Useful casein may be of micellar origin from normal milk or from Na-caseinate.

Furthermore, flavouring and/or aromatic agents may be added to the drinking yoghurt to obtain a flavoured drinking yoghurt. Flavours may be added as solids, but are preferably added in the form of liquids such as e.g. fruit juices. Aromatic agents may be added in either solids or liquids. Typical agents providing a pleasant scent are based on fruits.

In a useful embodiment, the drinking yoghurt is filled into suitable containers such as e.g. plastic or glass bottles, with or without caps. It has been found that the acidification and/or fermentation is not discontinued although a limited amount of air is available when filled in containers with a cap.

The pH of the drinking yoghurt in the containers may be monitored and when a desired pH has been reached, decreasing of the temperature is made to terminate the fermentation.

In accordance with of the present invention, the process results in a drinking yoghurt wherein the casein concentration is in the range from about 0.1% (w/w) to about 1% (w/w), such as in the range from about 0.1% (w/w) to about 0.8% (w/w), including in the range from about 0.1% (w/w) to about 0.5% (w/w), e.g. in the range from about 0.1% (w/w) to about 0.4% (w/w), in the range from about 0.1% (w/w) to about 0.3% (w/w), or in the range from about 0.1% (w/w) to about 0.2% (w/w), such as in the range from about 0.2% (w/w) to about 1% (w/w), including in the range from about 0.2% (w/w) to about 0.8% (w/w), the range from about 0.2% (w/w) to about 0.5% (w/w), in the range from about 0.2% (w/w) to about 0.4% (w/w) e.g. in the range from about 0.3% (w/w) to about 1% (w/w), in the range from about 0.3% (w/w) to about 0.8% (w/w), in the range from about 0.3% (w/w) to about 0.5% (w/w), such as in the range from about 0.4% (w/w) to about 1% (w/w), or such as in the range from about 0.4% (w/w) to about 0.8% (w/w).

In an embodiment, the process of the invention results in a total protein content in the drinking yoghurt, i.e. casein plus whey protein, which is in the range from about 0.9% (w/w) to about 2.7 % (w/w) or in the range from about 1.8% (w/w) to about 2.3 % (w/w), such as in the range from about 1.7 % (w/w) to about 2.6 %(w/w), including in the range from about 1.7 % (w/w) - 2.4 % (w/w), e.g. in the range from about 1.8 % (w/w) to about 2.3 % (w/w), in the range from about 1.9 % (w/w) to about 2.3 % (w/w), in the range from about 2 % (w/w) to about 2.2 % (w/w). Hence, in a preferred embodiment the total protein content is 2.1 % (w/w).

In an interesting embodiment, the present process further comprises the step of adding fruit or a fruit blend to the drinking yoghurt and subsequently subjecting fruit flavoured drinking yoghurt to a process to obtain a fruit flavoured smoothie drink.

The omission of the production of a protein network (coagulum) after fermentation and thus to the omission to destruct such a protein network provides the drinking yoghurt obtainable by the present process a unique protein structure or at least a different protein structure compared to a drinking yoghurt produced by the traditional manufacturing process.

Thus, in a further aspect, there is provided a drinking yoghurt obtainable by the process according to the invention. The drinking yoghurt of the present invention may, besides the above mentioned characteristics, be further characterized in having a different protein structure compared to traditional produced drinking yoghurt.

It should be noted that embodiments and features described in the context of one of the aspects of the present invention also apply to the other aspects of the invention.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps. In addition, the terms "at least one" and "one or more" is in this specification used interchangeably.

The invention will now be described in further details in the following non-limiting examples.

### Examples

### Example 1: A drinking yoghurt based on acid whey from cream cheese production

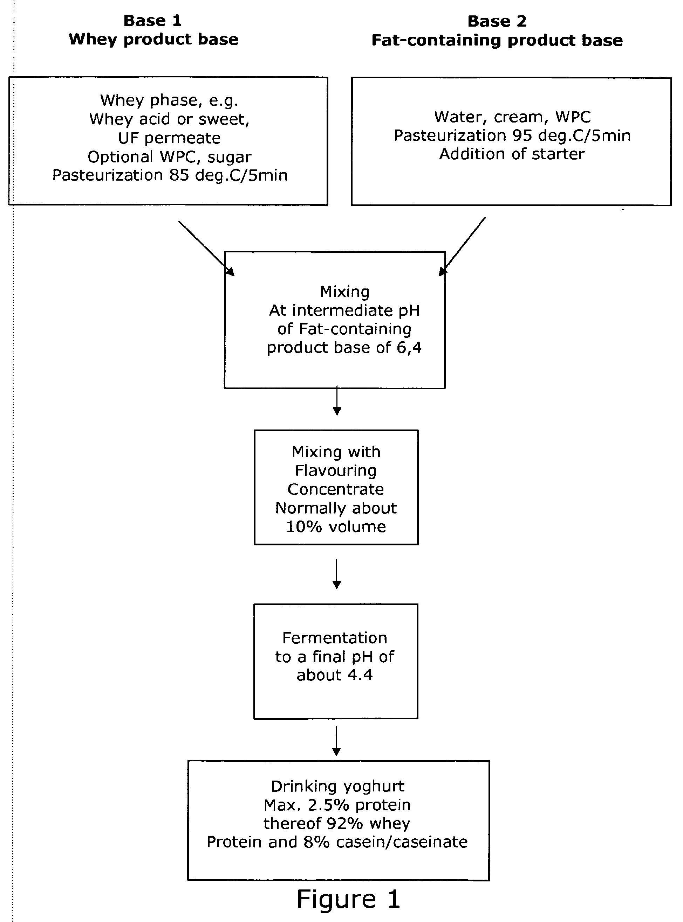

The purpose of this example is to manufacture a drinking yoghurt according to the present invention with the use of acid whey. The milk used here is of bovine origin. This example discloses a relationship between the organoleptic properties of a yoghurt and the ratio of the concentrations of casein and of whey protein. The general outline of procedure used in example 1 is shown in Fig. 1.

### Materials

The following ingredients were used for trial no 2 (see table below):

### For base 1 (whey product base):

12.45% (w/w) (8.72 kg) of sugar, 80.96% (w/w)(56.67 kg) of acid whey, 6.59% (w/w)(4.61 kg) powdered WPC (Lacprodan-30^{®} Arla Foods Ingredients).

### For base 2 (fat-containing product base):

12% of cream (fat level 40%), 0.58% caseinate (Miprodan-40^{®} Arla Foods Ingredients), 6.12% of powdered WPC (Lacprodan-30^{®} Arla Foods Ingredients), 80.8 % of water.

For the other trials 1, 3, 4 and 5 the ratio between caseinate (Miprodan-40^{®} Arla Foods Ingredients) and powdered WPC (Lacprodan-30^{®} Aria Foods Ingredients), as shown in the table 1.1 was varied to give whey protein and casein contents as written in the table below. Total protein content in final product was 2.3 % after addition of about 10 % fruit juice concentrate in volume.

**Table 1.1 Content of the base 2 (fat-containing product base)**

| **Material** | **Trial no. 1** | **Trial no. 2** | **Trial no. 3** | **Trial no. 4** | **Trial no. 5** |
|---|---|---|---|---|---|
| | **Weight %** (w/w) | **Weight %** (w/w) | **Weight %** (w/w) | **Weight %** (w/w) | **Weight %** (w/w) |
| Cream (40%) | 12,00% | 12,00% | 12,00% | 12,00% | 12,00% |
| Miprodan®-40 | 0,00% | 0,30% | 0,58% | 0,81% | 1,50% |
| Lacprodan®-30 | 7,50% | 6,29% | 6,12% | 4,81% | 3,02% |
| Water | 80,50% | 81,41 % | 81,30% | 82,38% | 83,48% |

| | kg | kg | kg | kg | kg |
|---|---|---|---|---|---|
| Cream (40%) | 3,60 kg | 3,60 kg | 3,60 kg | 3,60 kg | 3,60 kg |
| Miprodan®-40 | 0,00 kg | 0,09 kg | 0,17 kg | 0,24 kg | 0,45 kg |
| Lacprodan®-30 | 2,25 kg | 1,89 kg | 1,84 kg | 1,44 kg | 0,91 kg |
| Water | 24,15 kg | 24,42 kg | 24,39 kg | 24,72 kg | 25,04 kg |

### Procedure:

Base 1 was mixed cold and left for swelling for 30 minutes, then preheated to 65°C /15 seconds, pasteurized for 85°C /5 minutes, homogenized in two steps 200/50 bar, and subsequently cooled to 5°C.

Base 2 is mixed cold and left for swelling for 30 minutes, then preheated to 65°C for 15 seconds, pasteurized for 95°C / 5 minutes, homogenized in two steps 200/50 bar, and subsequently cooled to 42°C. Yoghurt starter yoghurt was added at a dosage of 0.02% (YCX1^{®} Chr. Hansen).

When pH in base 2 has reached pH 6.4, base 1 (70%) is mixed into base 2 (30%), giving an estimated pH in the mixture of 5.4. The fermentation continues of the mixed bases.

The mixture is added fruit juices, filled into bottles, and left at 40°C until pH has reached 4.7. Then the bottles were moved into a blast cooler to stop the fermentation.

The final pH was approximately 4.4.

### Results

The following results were obtained on sensory judging of the products (Wp = whey protein and C= casein):

**Table 1.2 Concentration of whey protein and casein in drinking yoghurt of trials 1-5 and the results obtain from the sensory judgment of the products**

| | **Content** | | | | **Evaluation** | | | | |
|---|---|---|---|---|---|---|---|---|---|
| **Trial** | **Wp** | **WP** | **C** | **C** | **Creamineness** | **Mouth feel** | **Syneresis** | **Viscosity** | **Remarks** |
| | **%** | **of total** | **%** | **of total** | **1-10** | **1-10** | **1-10** | **cp** | |
| **1** | **2.3** | **100** | **0** | **0** | 3 | 2 | 8 | 60 | Unstable |
| **2** | **2.2** | **96** | **0.1** | **4** | 6 | 3 | 5 | 62 | Not fully stable |
| **3** | **2.1** | **92** | **0.2** | **8** | 8 | 4 | 2 | 61 | Smooth Structure Stable |
| **4** | **2.0** | **88** | **0.3** | **12** | 8 | 4 | 4 | 79 | Somewh at Rough structure |
| **5** | **1.8** | **80** | **0.5** | **20** | 7 | 3 | 5 | 82 | Too viscous Grainy |

The measurement of the organoleptics was made by a sensorical panel of 5 trained persons.

The measurement of the creaminess was made according to a 10 point scale, where 10 point are given if the product evaluated is as creamy as whole milk, 5 point are given if the product is as creamy as semi-skimmed milk, and finally 1 ponit are given if the product resembles the creaminess of skimmed milk (no fat sensation).

Creaminess is defined as the feeling of smoothness in the mouth, versus no fat sensation at all.

The measurement of the mouthfeel was made according to a 10 point scale, where 10 point are given if the product evaluated feels as thick as whole milk, 5 point are given if the product feels as thick as semi-skimmed milk, and finally 1 point are given if the product resembles the thickness of skimmed milk

The degree of syneresis is defined as an undesired transparent layer on top of the endproduct. The measurement of syneresis was made after 48 hours of storage. For each trial, the drinking yoghurt was filled into a cylinder glass after mixing in fruit juice, and by measuring the amount of visual syneresis from the outside.

The measurements were transformed into points, according to a 10 point scale, defined as such:

| | **0 p.** | **1 p.** | **2 p.** | **3 p.** | **4 p.** | **5 p.** | **6 p.** | **7 p.** | **8 p.** | **9 p.** | **10 p.** |
|---|---|---|---|---|---|---|---|---|---|---|---|
| **% measured syneresis of total product** | 0 | 0-5 | 5-10 | 10-15 | 15-20 | 20-25 | 25-30 | 30-35 | 35-40 | 40-45 | > 45 |

The viscosity was measured at 10°C after 48 hours of storage, by means of Haake Rheostress RS1^{©} according to the following protocol:

### Measurement

### Principle

The viscosity of liquid products was measured on a rheometer (Haake rheostress) with a bob/cup system. The measurement was performed at 10°C since the viscosity is temperature dependent. The temperature was controlled by a water bath. The viscosity was converted to cP values. The cP values are proportional to the viscosity. The higher cP values the higher viscosity.

There were always made double repetition. The measurement was made three days from the production day.

### Method setup

The parameters for the program were as follows:
- Step 1: Zero point
- Step 2: Controlled Stress of 1,00 Pa for 0,50 min. at 5,00 °C.
   Frequency of 1,000Hz. 1 data points are collected
- Step 3: Controlled Rate of 50,00 1/s for 2,00 min. at 5,00 °C. 60 data points are collected
- Step 4: Lift apart

### Material

For this procedure the following were needed:
- Haake rheostress 1 rheometer
- Bob: Z34 DIN 53019 series
- Cup: Z34 DIN53018 series probes
- Water bath Haake k20/Haake DC50
- Water bath Thermo Haake V26

### Conditions

Method: Controlled rate
Shear rate: 50 s-1
Initial resting period: 30 sec.
Sampling period: 2 minutes
Sampling rate: 2 sec/data sampling
Temperature: 5°C

### Procedure

### 1. Sample preparation

Each sample was tapped into bottles during process and stored for 2 days in a cool storage (4°C). The bottles were placed in the laboratory cooler (6°C) to temperate for 1 day.

### 2. Setup

The water bath for the HAAKE rheostress was adjusted at 5°C.
The program for measurement of the product on the Haake rheostress was set up. The bob/cup system was installed.

### 3. Measuring

The Haake rheostress system was tared and the data-sampling program was started.
40 ml sample was added to the cup. Only the sample that was to be analysed was removed from the cool storage.

### 4. Cleaning

When the analysis was finished the bob/cup system was dismantled and cleaned with water and soap and afterwards with ionized water. The bob/cup system was wiped and installed again for the next sample.

### Result

The cP-value read after 1½ minute was reported.

### Conclusion

It appears that trial no 3 with a ratio of % WPC (w/w) 2.1:0.2 % Casein (w/w) equal to whey protein:casein ratio of 92 :8 showed the best results, in terms of low syneresis and high sensorical scores. However, the whey protein: casein ratio of 88:12 is also within the desired range for syneresis and sensorical scores. In conclusion, the example confirms that manufacturing a drinking yoghurt using acid whey as replacement for casein it is highly feasible and practical and that the resulting product has the desired texture.

### Example 2

### A stable drinking yoghurt based on sweet whey from Havarti cheese production (1.5% fat, 2.3% protein)

The purpose of this example is to illustrate the manufacture a drinking yoghurt according to the present invention with the use of sweet whey. The whey used here is a by-product from the manufacture of sweet Havarti cheese, and orange juice concentrate was added for flavoring purpose

The following ingredients were used:
2.5% of cream (fat level 40%), 0.80% powdered milk protein mix containing 45 % protein / 50:50 ratio of casein to whey protein, 3.9% of powdered WPC (Lacprodan-35^{®} Arla Foods Ingredients), 86.8% of sweet Havarti cheese whey, 6% of sugar.
All ingredients were mixed together from the start.

### Procedure:

Cream, sweet Havarti cheese whey and all dry ingredients were mixed cold and left for swelling for 45 minutes, then preheated to 65°C 15 seconds, pasteurized for 95°C/5 minutes, homogenized in two steps 200/50 bar, and subsequently cooled to 42°C. Yoghurt starter was added in a dosage of 0.02% (YC-183® Chr. Hansen).

The mixture was then added 10% fruit juices, filled into bottles, and left at 40°C until pH has reached 4.7. Then the bottles were moved into a blast cooler to stop the fermentation.

The final pH is approximately 4.3-4.5.

### Conclusion

In conclusion, the example confirms that manufacturing a drinking yoghurt using sweet whey as replacement for casein is highly feasible and practical and that the resulting product has the desired texture.

### Example 3

### A stable smoothie based on sweet whey from Havarti cheese production (1.6% fat, 2.3% protein)

The purpose of this example is to illustrate the manufacture of a stable smoothie according to the present invention with the use of sweet whey in replacement of casein. The whey used here is a by-product from the manufacture of sweet Havarti cheese, and orange juice concentrate was added for flavoring purpose.

The following ingredients were used:
For yoghurt base: 4.1% of Cream (fat level 40%), 1.23% powdered milk protein mix containing 45 % protein / 50:50 ratio of casein to whey protein, 6.0% of powdered WPC (Lacprodan-35^{®} Arla Foods Ingredients), 79.47% of sweet Havarti cheese whey, 9.2% of sugar.

For fruit base: 20 % orange juice concentrate (55% brix) diluted with water (80%)

### Procedure:

Cream, sweet havarti cheese whey and all dry ingredients are mixed cold, and left for swelling for 45 minutes, then preheated to 65°C/15 seconds, pasteurized for 95°C/5 minutes, homogenized in two steps 200/50 bar, and subsequently cooled to 42°C. Then yoghurt starter was added in a dosage of 0.02 % (YC-183^{®} Chr. Hansen).

The orange juice concentrate is mixed with water and added to the yoghurt base in the ratio 65:35.

The smoothie mixture was filled into bottles and left at 40°C until pH had reached 4.55. Then the bottles were moved into a blast cooler to stop the fermentation.

The final pH was approximately 4.1 - 4.25.

### Conclusion

In conclusion, the example confirms that manufacturing a fruit smoothie using sweet whey as replacement for casein is highly feasible and practical and that the resulting product has the desired texture.

## Claims

1. A drinking yoghurt comprising casein and whey protein in a casein:whey protein ratio of from 4:96 to 12:88 (w/w).

2. The drinking yoghurt according to claim 1, wherein the casein concentration is in the range from about 0.1 % (w/w) to about 1% (w/w).

3. The drinking yoghurt according to claim 1 or 2, wherein the total protein concentration is in the range from about 0.9% (w/w) to about 2.7% (w/w).

4. The drinking yoghurt according to any of claims 1 to 3, wherein the total protein concentration is in the range from about 1.8% (w/w) to about 2.3% (w/w).

5. The drinking yoghurt according to any of claims 1 to 4, said drinking yoghurt comprising acid whey or sweet whey.

6. A process for making drinking yoghurt without coagulum formation after fermentation, comprising combining casein and whey proteins to prepare a drinking yoghurt comprising a casein:whey protein ratio of from 4:96 to 12:88 (w/w).

7. The process according to claim 6 wherein a quantity of whey product base is added to a quantity of milk product base to prepare a drinking yoghurt comprising casein and whey proteins in a casein:whey protein ratio of from 4:96 to 12:88 (w/w).

8. The process according to claim 7, wherein the whey product base is based on a whey mixture com prising acid whey or sweet whey.

9. The process according to claim 8, wherein the whey mixture further comprises whey protein concentrate (WPC).

10. The process according to any of claims 7 to 9, wherein the content of the whey protein concentrate in the whey product base is between 6.0 and 7.2% (w/w).

11. The process according to claim 7, wherein the milk product base is based on a milk mixture obtained by mixing water with caseinate and/or whey protein concentrate (WPC) and a fat-containing component selected from the group consisting of cream, skim milk, full fat milk.

12. The process according to any of the claims 7 to 11, wherein the content of the whey protein concentrate in the milk product base is between 6.0 and 7.2% (w/w).

13. The process according to any of claims 6 to 12, wherein flavouring and/or aromatic agents are added to the drinking yoghurt to obtain a flavoured drinking yoghurt.

14. The process according to any of claims 6 to 13, wherein the drinking yoghurt is filled into suitable containers, and wherein the pH of the drinking yoghurt in the containers is monitored, and when a desired pH has been reached, the temperature is decreased to terminate the fermentation.

15. The process according to any of claims 6 to 14, wherein the casein content in the drinking yoghurt is in the range from about 0.1% (w/w) to about 1 % (w/w).

16. The process according to any of claims 6 to 15, wherein the total protein content in the drinking yoghurt, is in the range from about 0.9% (w/w) to about 2.7 % (w/w).

## Patentansprüche

1. Trinkjoghurt, umfassend Casein und Molkenprotein in einem Verhältnis von Casein:Molkenprotein von 4:96 bis 12:88 (G/G).

2. Trinkjoghurt nach Anspruch 1, wobei die Caseinkonzentration im Bereich von ca. 0,1 % (G/G) bis ca. 1 % (G/G) liegt.

3. Trinkjoghurt nach Anspruch 1 oder 2, wobei die Gesamtproteinkonzentration im Bereich von ca. 0,9 % (G/G) bis ca. 2,7 % (G/G) liegt.

4. Trinkjoghurt nach einem der Ansprüche 1 bis 3, wobei die Gesamtproteinkonzentration im Bereich von ca. 1,8 % (G/G) bis ca. 2,3 % (G/G) liegt.

5. Trinkjoghurt nach einem der Ansprüche 1 bis 4, wobei der Trinkjoghurt Sauermolke oder Süßmolke umfasst.

6. Verfahren zur Herstellung von Trinkjoghurt ohne Koagulumbildung nach der Fermentation, umfassend die Kombination von Casein und Molkenproteinen zur Herstellung eines Trinkjoghurts, umfassend ein Verhältnis von Casein:Molkenprotein von 4:96 bis 12:88 (G/G).

7. Verfahren nach Anspruch 6, wobei eine Menge der Molkenproduktbasis einer Menge der Milchproduktbasis zur Herstellung eines Trinkjoghurts zugefügt wird, umfassend Casein und Molkenproteine in einem Verhältnis von Casein:Molkenprotein von 4:96 bis 12:88 (G/G).

8. Verfahren nach Anspruch 7, wobei die Molkenprokuktbasis auf einem Molkengemisch basiert, umfassend Sauermolke oder Süßmolke.

9. Verfahren nach Anspruch 8, wobei das Molkengemisch ferner ein Molkenproteinkonzentrat (WPC) umfasst.

10. Verfahren nach einem der Ansprüche 7 bis 9, wobei der Gehalt des Molkenproteinkonzentrats in der Molkenproduktbasis zwischen 6,0 und 7,2 % (G/G) liegt.

11. Verfahren nach Anspruch 7, wobei die Milchproduktbasis auf einem Milchgemisch basiert, das erhalten wird durch: Mischen von Wasser mit Caseinat und/oder Molkenproteinkonzentrat (WPC) und einer fetthaltigen Komponente, die aus der Gruppe ausgewählt ist, bestehend aus Rahm, Magermilch und Vollmilch.

12. Verfahren nach einem der Ansprüche 7 bis 11, wobei der Gehalt des Molkenproteinkonzentrats in der Milchproduktbasis zwischen 6,0 und 7,2 % (G/G) liegt.

13. Verfahren nach einem der Ansprüche 6 bis 12, wobei dem Trinkjoghurt zum Erhalt eines aromatisierten Trinkjoghurts Geschmacks- und/oder Aromastoffe zugefügt werden.

14. Verfahren nach einem der Ansprüche 6 bis 13, wobei der Trinkjoghurt in geeignete Behältnisse gefüllt wird, und wobei der pH des Trinkjoghurts in den Behältnissen überwacht wird, und wenn ein erwünschter pH erreicht wurde, die Temperatur zum Abbruch der Fermentation gesenkt wird.

15. Verfahren nach einem der Ansprüche 6 bis 14, wobei der Caseingehalt im Trinkjoghurt im Bereich von ca. 0,1 % (G/G) bis ca. 1 % (G/G) liegt.

16. Verfahren nach einem der Ansprüche 6 bis 15, wobei der Gesamtproteingehalt im Trinkjoghurt im Bereich von ca. 0,9 % (G/G) bis ca. 2,7 % (G/G) liegt.

## Revendications

1. Yaourt à boire comprenant de la caséine et des protéines de petit-lait dans un rapport de la caséine aux protéines de petit-lait de 4:96 à 12:88 (p/p).

2. Yaourt à boire selon la revendication 1, dans lequel la concentration totale de caséine se situe dans la plage d'environ 0,1 % (p/p) à environ 1 % (p/p).

3. Yaourt à boire selon la revendication 1 ou la revendication 2, dans lequel la concentration totale de protéines se situe dans la plage d'environ 0,9 % (p/p) à environ 2,7 % (p/p).

4. Yaourt à boire selon l'une quelconque des revendications 1 à 3, dans lequel la concentration totale de protéines se situe dans la plage d'environ 1,8 % (p/p) à environ 2,3 % (p/p).

5. Yaourt à boire selon l'une quelconque des revendications 1 à 4, ledit yaourt à boire comprenant du petit-lait acide ou du petit-lait doux.

6. Procédé de fabrication de yaourt à boire sans formation de coagulum après fermentation, comprenant la combinaison de caséine et de protéines de petit-lait pour préparer un yaourt à boire comprenant un rapport de la caséine aux protéine de petit-lait de 4:96 à 12:88 (p/p).

7. Procédé selon la revendication 6, dans lequel une certaine quantité de base de petit-lait est ajoutée à une certaine quantité de base de produit laitier pour préparer un yaourt à boire comprenant de la caséine et des protéines de petit-lait dans un rapport de la caséine aux protéines de petit-lait de 4:96 à 12:88 (p/p).

8. Procédé selon la revendication 7, dans lequel la base de petit-lait est basée sur un mélange de petit-lait comprenant du petit-lait acide et du petit-lait doux.

9. Procédé selon la revendication 8, dans lequel le mélange de petit-lait comprend en outre un concentré de protéines de petit-lait (WPC).

10. Procédé selon l'une quelconque des revendications 7 à 9, dans lequel la teneur du concentré de protéines de petit-lait dans la base de petit-lait se situe entre 6,0 et 7,2 % (p/p).

11. Procédé selon la revendication 7, dans lequel la base de produit laitier est basée sur un mélange de lait obtenu en mélangeant de l'eau avec un caséinate et/ou avec un concentré de protéines de petit-lait (WPC) et avec un composant contenant de la graisse choisi dans le groupe constitué de crème, de lait écrémé et de lait à pleine teneur en graisses.

12. Procédé selon l'une quelconque des revendications 7 à 11, dans lequel la teneur en concentré de protéines de petit-lait dans la base de produit laitier se situe entre 6,0 et 7,2 % (p/p).

13. Procédé selon l'une quelconque des revendications 6 à 12, dans lequel des agents d'assaisonnement et/ou des agents aromatiques sont ajoutés au yaourt à boire pour obtenir un yaourt à boire assaisonné.

14. Procédé selon l'une quelconque des revendications 6 à 13, dans lequel le yaourt à boire est versé dans des récipients appropriés et dans lequel le pH du yaourt à boire dans les récipients est contrôlé et, lorsqu'un pH souhaité a été atteint, la température est réduite pour mettre fin à la fermentation.

15. Procédé selon l'une quelconque des revendications 6 à 14, dans lequel la teneur en caséine dans le yaourt à boire se situe dans la plage d'environ 0,1 % (p/p) à environ 1 % (p/p).

16. Procédé selon l'une quelconque des revendications 6 à 15, dans lequel la teneur totale en protéines dans le yaourt à boire se situe dans la plage d'environ 0,9 % (p/p) à environ 2,7 % (p/p).
